# EUROPÄISCHE PATENTSCHRIFT

(11) **EP 4 165 145 B1**
(45) Veröffentlichungstag und Bekanntmachung des Hinweises auf die Patenterteilung: **04.09.2024**
(21) Anmeldenummer: 21735143.6
(22) Anmeldetag: 09.06.2021
(51) Int. Cl.: C09K 21/02, C08L 101/12, E04B 1/94

(54) **BRANDSCHUTZSYSTEM**
FIRE PROTECTION SYSTEM
SYSTÈME DE PROTECTION CONTRE L'INCENDIE

(30) Priorität: 10.06.2020 AT 505062020
(43) Veröffentlichungstag der Anmeldung: 19.04.2023
(73) Patentinhaber: Eine, Illarion, Kiev 03191 (UA); Döberl, Egon, 4264 Grünbach bei Freistadt (AT)
(72) Erfinder: Eine, Illarion, Kiev 03191 (UA); Döberl, Egon, 4264 Grünbach bei Freistadt (AT)
(74) Vertreter: Burgstaller, Peter
(86) Internationale Anmeldenummer: PCT/AT2021/060201
(87) Internationale Veröffentlichungsnummer: WO 2021/248173

(56) Entgegenhaltungen:
- EP-A1- 1 431 027
- JP-B1- S4 816 438

## Beschreibung

Die Erfindung betrifft ein Brandschutzsystem, insbesondere ein gebrauchsfertiges Brandschutzsystem und dessen Herstellung und Verwendung.

Die Erfindung betrifft insbesondere ein Brandschutzsystem auf der Basis von Alkalimetallhydrosilikaten, vorzugsweise Natriumhydrosilikat, welches bevorzugt durch Alkalisierung natürlichen silikatischen Rohstoffs erhalten wurde.

Trotz der Tatsache, dass die chemische Zusammensetzung solcher Materialien nicht genau bestimmt werden kann, haben diese Materialien gemeinsame Eigenschaften. Sie können sich beim Erhitzen erweichen und zur Bildung einer effektiven Brandschutzbarriere aufblähen.

Der Prozess des Erweichens und Blähens solcher Materialien ist üblicherweise mit der Absorption einer großen Wärmemenge verbunden. Auf dieser Grundlage können solche Materialien als Komponenten von Brandschutzsystemen verwendet werden.

Brandschutzmaterialien bzw. -systeme sollen den folgenden Anforderungen entsprechen:
a. Höchstmögliche spezifische Wärmeabsorption in Kontakt mit Hochtemperaturquelle.
b. Aufblähen bei Kontakt mit einer Hochtemperaturquelle und / oder einer Flamme mit einer erheblichen Zunahme der Dicke der Barriere, welche die Oberfläche eines Erzeugnisses oder einer Baukonstruktion vom Feuer bzw. von der hohen Temperatur trennt.
c. Aufblähen ohne Emission von giftigen und/oder chemisch aggressiven Gasen/Stoffen.
d. Einfach in der Anwendung und ohne Erfordernis von spezieller Ausrüstung und / oder hochqualifiziertem Personal für die Auftragung.
e. Gute Adhäsion an der zu schützenden Oberflächen, wie Holz, Metall, Beton etc. Keine zusätzlichen Mittel/Stoffe für mechanische Befestigung nötig.
f. Einfache und billige Herstellung; hauptsächlich Verwendung natürlicher Rohstoffe.
g. Eignung für die Langzeitlagerung mit stabiler chemischer Zusammensetzung und stabilen physikalischen Eigenschaften. Keine speziellen Bedingungen (Temperaturregelung, Zwangsbelüftung, Feuerlöschung usw.) bei Langzeitlagerung benötigt.
h. Möglichst minimierte CO₂-Emission während der Herstellung, Lagerung und Anwendung.

Die getrennte Erfüllung oder Erfüllung einiger Kombinationen der angegebenen Anforderungen ist nicht kompliziert. Auf dem Markt gibt es viele Materialien / Systeme für den Brandschutz von Baukonstruktionen, Rohrleitungen und Kabeln. Diese sind üblicherweise nicht universell, sondern haben enge Anwendungsbereiche.

Es gibt eine Gruppe von Materialien/Systemen für den Brandschutz, hauptsächlich von Stahlkonstruktionen, die aus leichten porösen Mineralfüllstoffen (expandiertes Vermiculit und Perlit) und hydraulischen Mineralbindemitteln bestehen.

Solcher Brandschutz ist "passiv", d.h. bei Kontakt mit einer Wärme-/Feuerquelle erfolgen keine Bläh- und Ablationsprozesse.

Die Aufbringung solcher Materialien/Systeme erfolgt in Form von Auftragen/Sprühen einer relativ dicken Schicht unter Verwendung von speziellen Anlagen.

Die Feuerwiderstandsklasse hängt ausschließlich von der Aufheizzeit der Dämmschicht ab.

Die nächste Gruppe von Brandschutzsystemen sind leichte nichtbrennbare Platten hauptsächlich aus Mineralfasern oder Calciumsilikat.

Solche Systeme sind auch "passiv", arbeitsintensiv in der Anwendung und erfordern spezielle technische Lösungen für ihre mechanische Befestigung und die Abdichtung von Fugen/Nähten zwischen den Platten.

Eine große Gruppe Brandschutzmaterialien basiert auf der Verwendung von sogenannten Antipyrogenen , hauptsächlich ammonium- und halogenhaltigen Salzen.

Unter dem Einfluss hoher Temperaturen erfolgt eine thermische Zersetzung des Antipyrogens mit Freisetzung von großen Mengen toxischer, chemisch-aggressiver Gase, die den Brennprozess verhindern.

Es gibt auch "aktive" Brandschutzsysteme, die intumeszenten (schwellenden) Graphit enthalten.

Solche Materialien blähen sich unter dem Einfluss hoher Temperaturen zu einer vielfach erhöhten Dicke der wärmeisolierenden Brandschutzbarriere auf.

Der Blähprozess von Graphit geht mit einer Wärmeabsorption einher, dadurch erfolgt eine allmähliche Erwärmung der wärmeisolierenden Barriere.

Man soll beachten, dass die Anfangstemperaturen der Graphitaufblähungsreaktion in verschiedenen Kompositionen über 200°C liegen.

Am wirksamsten sind Brandschutzsysteme auf der Basis von Alkalimetallhydrosilikaten, vorzugsweise Natriumhydrosilikaten.

Gelartige Hydrosilikatmaterialien sind seit so langer Zeit bekannt, dass Informationen über sie und die Herstellungsprozesse bereits in Lehrbüchern enthalten sind.

Zum Beispiel ist s.g. "Wasserglas" bekannt.

Wasserglas als Bindemittel wird häufig in Brandschutzmaterialien bzw. -systemen verwendet.

Man soll beachten, dass Kompositionswerkstoffe auf der Basis von Wasserglas in einer feuchten Umgebung hygroskopisch und instabil sind und sich in einer trockenen Gasumgebung spalten (Oberflächenrisse). Es ist wichtig, dass Wasser im Wasserglas nur als Dispersionsmedium dient, welches während des Trocknens leicht entfernt werden kann und daher die Feuerbeständigkeit des Kompositionsmaterials nicht beeinträchtigt.

Die Basis von Wasserglas ist festes "lösliches Glas", das durch Schmelzen von Quarzsand bei 1100-1400°C mit Soda und/oder Natriumsulfat erhalten wird. Während des Schmelzens wandelt sich SiO₂ von einem kristallinen in einen amorphen Zustand zu einem Silikatblock um.

Wasserglas wird erhalten, indem ein Silikatblock gemahlen und meist mit Autoklavierprozessen in Wasser gelöst wird. Offensichtlich sind die Schmelz- und Autoklavierprozesse energetisch nachteilig.

Wasserglas wird daher zunehmend aus Rohstoffen auf Basis von amorphem SiO₂ hergestellt. Es wird in Autoklaven bei einer Temperatur von etwa 200°C mit ätzenden Alkalilösungen mit direkter Herstellung einer kolloidalen Lösung von Natriumhydrosilicat behandelt. Leider eignen sich für ein solches "nasses" Verfahren zur Herstellung von Wasserglas nur selten vorkommende Kieselerden mit einem Anteil von amorphem SiO₂ von mehr als 98%.

Eine Reihe von Schritten zur Entwicklung einfacher und wirtschaftlicher Verfahren zur Herstellung qualitativer Hydrosilikatgele aus Rohstoffen mit einem relativ geringen Anteil von amorphem SiO2 wurden bereits unternommen.

So wird im Patent UA Nr. 3802 ein Verfahren zur Herstellung eines Hydrosilikatgels beschrieben, dass das Mahlen von Kieselerden, die mindestens 85% amorphes SiO2 enthalten, zu einer feinkörnigen Masse und das Behandeln dieser Masse mit Natronlauge in einem Medium aus gesättigtem Wasserdampf bei einer Temperatur von 80-100°C für 20-60 Minuten umfasst.

Ein Produkt das nach diesem Verfahren hergestellt ist, bildet eine klebrige Masse aus und kann einmal schmelzen. Bei Erhitzen über 200°C härtet es irreversibel aus.

Der spezifische Energieverbrauch für die Herstellung eines solchen Gels ist deutlich geringer als für die Herstellung von Wasserglas nach dem "Nassverfahren".

Natronlauge - eine konzentrierte (48%) Lösung von NaOH - erfordert jedoch spezielle Lagermaßnahmen und bei einer Laugentemperatur von 80-100 °C erfordert sie auch besonders strenge Maßnahmen zum Personalschutz.

Zusätzlich variieren die Klebrigkeit und Viskosität des gemäß diesen Verfahrens erhaltenen Hydrosilikatgels in einem weiten Bereich.

Ein Verfahren zur Herstellung eines stabileren harten Hydrosilikatgels ist aus der internationalen Publikation WO 97/33843 vom 18.09.1997 bekannt.

Dieses Verfahren umfasst:
- Zerkleinern von Kieselerden, die mindestens 70 Gew.-% amorphes SiO₂ enthalten, bis Partikelgröße 1,0-2,5 mm.
- Mischen o.g. Partikel mit einer wässrigen Lösung von ätzendem Alkali.
- Dämpfen der Mischung bei Atmosphärendruck und einer Temperatur von 70-90 °C und Mischen bis zur Bildung von Hydrosilikaten.
- Abkühlen der gedämpften Mischung bis zu einer Temperatur von 18-25 °C in einer Zeit, die ausreicht für einen Übergang in den Zustand eines brüchigen Hydrosilikatgels.

Bei Erhitzung über 100 °C wird dieses harte Gel plastisch, bei Temperaturen über 200 °C bläht es sich intensiv auf und härtet irreversibel aus.

Das oben beschriebene Verfahren erfordert jedoch auch komplizierte und teure Anlagen für Lagerung und Transport der Natronlaugenlösung.

Darüber hinaus eignet sich das Gel dieser Verfahren begrenzt als Bindemittel und insbesondere als Klebstoff.

Dieser Nachteil ist besonders stark beim Versuchen, mechanisch haltbare Brandschutzwerkstoffe herzustellen, um Baukonstruktionen im Brandfall zu schützen.

Weitere experimentelle Studien zeigten, dass es möglich ist, die Adhäsion und die technologischen Eigenschaften von festen Hydrosilikatgelen zu verbessern.

Aus der internationalen Publikation desselben Autors WO 00/46277 vom 08.10.2000 ist daher ein verbessertes Verfahren zur Herstellung eines harten Hydrosilikatgels bekannt, das im technischen Sinne dem gegenständlichen Verfahren am nächsten kommt.

Mit dieser Methode wird ein festes Gel erhalten, das eine Mischung von Alkalimetallhydrosilikaten und 30 bis 40 Gew.-% gebundenem Wasser enthält.

Gleichzeitig beträgt das Massenverhältnis von "Dispersionswasser" und "Chemisch gebundenem Wasser" von 5:3 bis 4: 1.

Ein solches Gel ist ein Hydrosilikat - "Duroplast":
- das nach dem Mahlen zur Verdünnung mit Wasser geeignet ist.
- das während des kurzzeitigen Erhitzens im Temperaturbereich von 45-250 °C sich einmal in einen viskos-flüssigen Zustand transformiert.
- das bei längerem Erhitzen bei einer Temperatur von mehr als 180°C unter Zerstörung von Hydraten, vorläufiger Expansion mit Schmelzen der Oberflächenschicht und endgültiger irreversibler Expansion aushärtet.

Dieses harte Gel ist besonders effektiv als Brandschutzmaterial (auch in Form von wässrigen Dispersionen von Hydrosilikaten).

Diese Effektivität kann man wie folgt erklären:
- Nach dem Entladen aus dem Reaktor wird beim Abkühlen des viskoelastischen Halbzeugs ein hartes Gel gebildet, wobei in der Dispersion enthaltenes Wasser chemisch in der Gelstruktur gebunden wird, als sogenanntes Kristall- oder Hydratwasser.
- Die Entfernung von gebundenem Wasser aus einem Hydrogel benötigt eine erhebliche Wärmemenge. Darum bleibt die Oberflächentemperatur der geschützten Konstruktion während eines Brandfalls lange Zeit bei ca. 100 °C (je länger bzw. je dicker die Schicht aus Brandschutzmaterial ist).

Leider hat dieses Verfahren zur Herstellung eines Hydrosilikatgels auch einige Nachteile. Insbesondere:
- Notwendigkeit eines komplexen und teuren Anlagenkomplexes aufgrund der Verwendung von flüssigen ätzenden Laugen und deren Erwärmung.
- Für die Verwendung als Brandschutzstoff eignet sich nur eine kolloidale wässrige Dispersion, die durch Zerkleinern und Verdünnen eines harten Gels mit Wasser erhalten wird. Ein solches Kolloid ist nicht praktikabel, weil es erst am zweiten oder dritten Tag nach Verdünnung des zerkleinerten harten Gels mit Wasser eine kolloidale Substanz bildet. Darüber hinaus ist es kurzlebig und kann nur drei bis vier Tage lang verwendet werden. Das heißt, dass eine industrielle Herstellung, ein Transport und die Langzeit-Lagerung eines solchen kolloidalen Brandschutzmittels nicht möglich sind.
- Zusätzlich kann eine kolloidale wässrige Dispersion von Hydrosilicat als Brandschutzmittel nur in einer Schicht von nicht mehr als 1-1,5 mm auf die geschützte Oberfläche aufgebracht werden. Beim Auftragen in einer dickeren Schicht auf eine vertikale Oberfläche fließt das kolloidale Brandschutzmittel über die Oberfläche. Beim Trocknen nimmt die Dicke der kolloidalen Schicht ab und bildet einen harten Gelfilm mit einer Stärke von 0,5-0,7 mm. Gewöhnlich dauert der Trocknungs- und Gelfilmbildungsprozess 16-20 Stunden. In der Regel erfordert der Brandschutz vieler (insbesondere Stahl-) Baukonstruktionen für ausreichend hohe Feuerwiderstandsklassen eine deutlich höhere Schichtdicke. Die Ergebnisse von Brandversuchen an einer Stahlkolonne zeigten, dass zur Erreichung der Feuerwiderstandsklasse REI 60 die erforderliche Gelschichtdicke 4,5 mm betragen muss. Eine solche Schicht mit schichtweisem Aufbringen und Trocknen kann in 7-8 Tagen aufgebracht werden, was völlig unpraktikabel und im Massenaufbau nicht akzeptabel ist. Darüber hinaus ergab die Zugabe einer Bewehrung in Form von kurzen Basaltfasern und/oder porösen Füllstoffen zu der kolloidalen Substanz nicht den erwarteten Effekt, weil bei einer Menge des Füllstoffes, die die Dicke der Gelschicht beeinflussen könnte, das Aufbringen der Brandschutzmittel unmöglich wird.
- Auch während der Brandversuche gab es Probleme aufgrund der Tatsache, dass die Gelschicht ohne Armierung erweicht, quillt und unter dem Einfluss ihres eigenen Gewichts von der geschützten Oberfläche hinunterläuft. Dieser Effekt war umso stärker, je dicker die Gelschicht war. Das Erreichen einer Feuerwiderstandsklasse von über REI 60 war daher technisch nicht möglich.

Ein energieeffizientes Verfahren für Herstellung eines harten Hydrosilikatgels ist im Patent UA88233 vom selben Autor beschrieben.

Vom zuvor beschriebenen Verfahren unterscheidet es sich darin, dass es Folgendes umfasst:
- Zerkleinern von Kieselerden mit einem Gehalt von amorphen SiO2 von mindestens 70 Gew.-%, um s.g. Kieselerden-Sand zu erhalten,
- Dosierung dieses Sandes und eines lufttrocknenden Alkalis,
- deren Beladung in einen Reaktor bei eingeschaltetem Mischer und Mischen unter Selbsterhitzung bis zum Erhalt eines heißen viskosen Halbzeugs,
- Entladung des heißen viskosen Halbzeugs in Behälter,
- Lagerung dieses Halbzeugs in Behältern bei allmählicher freier Abkühlung auf Umgebungstemperatur bis zum Erhalt eines "reifen" harten Hydrosilikatgels.

Die Verwendung von trockenen Laugen vereinfacht erheblich den Anlagenkomplex des Prozesses und reduziert wesentlich den Bedarf an Fremdwärmequellen.

Solches Gel kann nach Zerkleinern und Auflösen mit Wasser auf die erforderliche Viskosität als Mineralkleber zur Herstellung von praktisch nichtbrennbaren Verbundwerkstoffen verwendet werden. Darüber hinaus soll man beachten, dass sich auf der Oberfläche der Partikel des zerkleinerten Gels viele aktive Fragmente gebrochener Polysilikatbindungen befinden, die versuchen, zusammenzukleben und zu einem harten Gelmonolith zu polymerisieren.

Dieser Effekt macht es nahezu unmöglich, Partikeln von zerkleinertem Gel genau zu dosieren, und führt dadurch zu einer ungleichmäßigen Qualität des erhaltenen Klebstoffs.

Zusätzlich kann ein solcher Klebstoff, wie oben beschrieben, nicht länger als drei bis vier Tage ohne Verlust von Eigenschaften gelagert werden.

Die JP2015101635A beschreibt eine Trockenmischung aus Metallhydroxidpartikeln und Siliziumdioxidpartikeln, welche einem Kunststoff als Flammschutzmittel beigemengt werden.

Die JP2010228960 A offenbart ein Verfahren, bei welchem Alkalimetallsilikat, Metallhydroxid und ein Füllstoff in Wasser dispergiert werden.

Die JPS4816438B betrifft ein Verfahren zur Erzeugung von Alkalisilikat.

Die WO2012003593A1 betrifft eine transparente Hitzeschutzfolie für die Herstellung von Hitzeschutzglas.

EP1431027A1 offenbart Brandschutzfolien.

### Beschreibung des Erfindungsgegenstands

Eine Aufgabe der Erfindung ist es, ein effektives, langlebiges und benutzerfreundliches Brandschutzsystem bereitzustellen.

Diese Aufgabe wird mit einem Brandschutzsystem gemäß Anspruch 9 gelöst.

Eine weitere Aufgabe der Erfindung ist es, ein wesentlich einfacheres und wirtschaftlicheres Verfahren zur Herstellung eines effektiven, langlebigen und benutzerfreundlichen Brandschutzsystems zu schaffen. Diese Aufgabe wird mit dem Verfahren gemäß Anspruch 1 gelöst.

Das vorgeschlagene Verfahren umfasst Folgendes:
Dosierung eines zerkleinerten Siliciumdioxid-Rohstoffs und eines granulierten Alkalimetallhydroxids in einen Reaktor;
Hinzufügen von Wasser im Reaktor und Mischen unter Selbsterhitzung bis zum Erhalt eines heißen Halbzeugs;
Lagerung dieses Halbzeugs bis zum Erhalt einer homogenen kolloidalen wässrigen Dispersion des Alkalimetallhydrosilikats;
Aufbringen der homogenen kolloidalen wässrigen Dispersion auf ein Substrat; Verpackung des Brandschutzsystem luftdicht oder unter vakuum, solange die Dispersion flüssig ist.

Das vorgeschlagene Verfahren umfasst bevorzugt Folgendes:
- Zerkleinern von porösen Siliciumdioxid-Rohstoffen, bevorzugt bis zu einer Partikelgröße, die eine spezifische Oberfläche des Materials im Bereich 0,05-0,5 m²/Gramm aufweist,
- Dosierung dieses Rohmaterials und granuliertes Alkalimetallhydroxid (bevorzugt lufttrocken),
- Bewässerung im Reaktor und Mischen unter Selbsterhitzung bis zum Erhalt eines heißen Halbzeugs,
- Entladen des heißen Halbzeugs in einen Behälter und Lagerung dieses Halbzeugs im Behälter oder Lagerung im Reaktor bis zum Erhalt einer homogenen kolloidalen wässrigen Dispersion des Alkalimetallhydrosilikats.

Bevorzugt umfasst das Verfahren weiters:
- Die Herstellung eines Brandschutzsystems, das aus einer kolloidalen wässrigen Dispersion eines Alkalimetallhydrosilikats, einem Bewehrungsmaterial und einer Trennfolie besteht.
- Verpacken von Zuschnitten des Brandschutzsystems in Vakuumverpackung.

Die Erfindung löst die Aufgabe mit folgenden Mitteln:
- Änderungen im Rohstoffverhältnis
- Änderungen von Reihenfolge und Bedingungen der Reagenzienvorbereitung und der Alkalisierung von Kieselerden
- Änderungen im Herstellungsverfahren einer kolloidalen wässrigen Dispersion von Alkalimetallhydrosilikat.

Der Hauptunterschied besteht darin, dass durch Alkalisierung und Bewässerung von Kieselerden unmittelbar eine stabile kolloidale wässrige Dispersion von Alkalimetallhydrosilicat erzeugt wird. Das Verhältnis des Trockengewichts des Siliciumdioxid-Rohstoffs zum Trockengewicht des Alkalimetallhydroxids liegt bevorzugt im Bereich von 1:1 bis 5:1.

Bevorzugt erhält die Mischung bzw. das heiße Halbzeug durch die Selbsterhitzung eine Temperatur in einem Bereich von 60°C-100°C.

Der Siliciumdioxid-Rohstoff ist bevorzugt Kieselerde natürlichen Ursprungs. Als Kieselerde wird insbesondere ein Mineral mit hohem Siliziumgehalt verstanden. Es wird kein pyrogenes SiO2 und/oder gefälltes SiO2 und/oder Kieselsol verwendet.

Das Alkalimetallhydroxid ist bevorzugt Natriumhydroxid (NaOH). Bevorzugt wird beim Herstellungsverfahren kein KOH zugegeben. Besonders bevorzugt wird beim Herstellungsverfahren ausschließlich NaOH zugegeben.

Bevorzugt werden beim Herstellungsverfahren ausschließlich Siliciumdioxid-Rohstoff, insbesondere Kieselerde und Alkalimetallhydroxid, insbesondere Natriumhydroxid, und Wasser zugegeben.

Alle bisherigen Verfahren haben die Herstellung einer kolloidalen wässrigen Dispersion eines Alkalimetallhydrosilikats durch Zerkleinern und Auflösen eines harten Hydrosilikatgels mit Wasser durchgeführt.

Ein zusätzlicher Unterschied besteht darin, dass das Brandschutzsystem in Form von gebrauchsfertigen Rollen/Zuschnitten hergestellt wird, die eine Schicht von kolloidaler wässriger Dispersion eines Alkalimetallhydrosilikats, ein Armierungsgewebe - vorzugsweise Sackleinen oder Basalttextil - und eine Trennfolie umfassen. Bei der Herstellung solcher Rollen oder Zuschnitte wird das Armierungsgewebe bevorzugt auf oder in eine Schicht einer kolloidalen wässrigen Dispersion eines Alkalimetallhydrosilikats aufgebracht, dessen Gewicht wesentlich höher als das Gewicht des Armierungsgewebes ist.

Der folgende zusätzliche Unterschied besteht darin, dass die Bildung eines harten Gels eines Alkalimetallhydrosilikats erst direkt auf der zu schützenden Oberfläche erfolgt, nachdem das Brandschutzsystem aufgebracht wurde, da die fertigen Rollen/Sätze in einer Vakuumverpackung verpackt sind, die die Dehydratisierung der wässrigen Dispersion eines Alkalimetallhydrosilikats verhindert.

Beim erfindungsgemäßen Herstellungsverfahren wird bevorzugt kein Entschäumer wie Polyol und/oder Syloxan verwendet. Beim erfindungsgemäßen Herstellungsverfahren wird bevorzugt kein Ammoniumsalz zugegeben um die Viskosität zu verringern. Beim erfindungsgemäßen Herstellungsverfahren wird bevorzugt kein Glycerin, Syloxan, Polyol und/oder Ammoniak zugegeben.

Die Erfindung umfasst ein bevorzugtes Verfahren zur Herstellung eines Brandschutzsystems, umfassend:
- Zerkleinern eines Siliciumdioxid-Rohstoffs auf eine Partikelgröße, die eine spezifische Oberfläche des Materials im Bereich von 0,05 bis 0,5 m² / Gramm aufweist;
- Dosierung des zerkleinerten Siliciumdioxid-Rohstoffs und eines lufttrockenen, granulierten Alkalimetallhydroxids in einen Reaktor;
- Hinzufügen von Wasser im Reaktor und Mischen unter Selbsterhitzung bis zum Erhalt eines heißen Halbzeugs;
- Füllen des heißen Halbzeugs in einen Behälter und Lagerung dieses Halbzeugs im Behälter, bis zum Erhalt einer homogenen kolloidalen wässrigen Dispersion des Alkalimetallhydrosilikats;
- Aufbringen der homogenen kolloidalen wässrigen Dispersion auf ein Substrat.

Die homogene kolloidale wässrige Dispersion wird bevorzugt ohne Vortrocknung auf das Substrat aufgebracht und es erfolgt bevorzugt auch am Substrat keine Vortrocknung, insbesondere keine Vortrocknung in einem Ofen.

Damit der Patentschutz nicht durch Übererfüllung von Erfordernissen oder das Hinzufügen von nicht unbedingt notwendigen Schritten umgangen werden kann, wird auf folgende Dinge hingewiesen:
Bevorzugt wird Siliciumdioxid-Rohstoff auf eine Partikelgröße, die eine spezifische Oberfläche des Materials im Bereich von 0,05 bis 0,5 m² / Gramm aufweist zerkleinert. Eine weitere Zerkleinerung ist für das Herstellungsverfahren nicht erforderlich aber nicht ausgeschlossen und somit von der gegenständlichen Erfindung mitumfasst. Eine feinere Zerkleinerung ist in der Regel nachteilig, da diese meist mit höheren Kosten verbunden ist.
Die Verwendung eines bereits zerkleinerten Rohstoffs, sodass die Zerkleinerung nicht an Ort und Stelle erfolgt, ist auch möglich und von der gegenständlichen Erfindung mitumfasst.
Das granulierte Alkalimetallhydroxid ist bevorzugt lufttrocken. Eine spezielle Lagerung in einer kontrollierten Atmosphäre oder ein Trocknen oder Befeuchten des Alkalimetallhydroxid vor dem Einbringen in den Reaktor ist nicht notwendig, jedoch denkbar und von der gegenständlichen Erfindung mitumfasst.
Die Reaktion erfolgt unter Selbsterhitzung. Eine Zufuhr oder Abfuhr von Wärmeenergie über den Reaktor ist nicht notwendig, aber auch nicht ausgeschlossen und somit von der gegenständlichen Erfindung mitumfasst.
Das Halbzeug wird bevorzugt vom Reaktor in einen Behälter umgefüllt. Den Reaktor selbst als Behälter zu verwenden, bzw. die Reaktion in einem geeigneten Behälter ablaufen zu lassen, scheint bei einer Herstellung im Batchbetrieb aber grundsätzlich denkbar und ist von der Erfindung mitumfasst.

Bevorzugt wird die homogene kolloidale wässrige Dispersion auf ein Substrat in Form einer Trennfolie aufgebracht.

Bevorzugt wird eine Armierung in die aufgebrachte homogene kolloidale wässrige Dispersion eingelegt oder auf diese aufgelegt.

Bevorzugt liegt das Verhältnis der Masse der Schicht der kolloidalen wässrigen Dispersion von Alkalimetallhydrosilikat und der Masse des Armierungsmaterials im Bereich von 10: 1 bis 2:1. Bevorzugt wird ein Streifen des Brandschutzsystems zu einer Rolle gerollt.

Das Brandschutzsystem wird luftdicht verpackt oder vakuumverpackt, solange die kolloidale wässrige Dispersion flüssig ist. Die Dispersion liegt somit flüssig in der Verpackung vor und härtet erst nach öffnen der Verpackung aus.

Die Erfindung umfasst ein gebrauchsfertiges Brandschutzsystem, umfassend eine Dispersion eines Alkalimetallhydrosilikats, ein Substrat und eine Armierung, wobei das Brandschutzsystem in einer luftdichten Verpackung oder einer Vakuumverpackung vorliegt.

Bevorzugt weist die kolloidale wässrige Dispersion des Alkalimetallhydrosilikats im vakuumverpackten Zustand eine hohe Adhäsion auf Metall-, Holz- und Betonoberflächen auf, bevorzugt über einen Zeitraum von zumindest einem Jahr.

Bevorzugt ist die Armierung ein Armierungsgewebe, bevorzugt in Form von Sackleinen und/oder Basalttextilien. Bevorzugt ist das Armierungsgewebe von der Dispersion durchdringbar. Bevorzugt dringt die Dispersion zwischen den Fasern des Armierungsgewebes ein.

Bevorzugt ist das Substrat eine Trennfolie, welche dicht gegenüber der Dispersion ist.

Die Erfindung umfasst die Verwendung des gebrauchsfertigen Brandschutzsystems, wobei das Brandschutzsystem nach Entfernen der Verpackung oder Vakuumverpackung auf eine zu schützende Oberfläche aufgebracht wird und die kolloidale wässrige Dispersion des Alkalimetallhydrosilikats nachfolgend aushärtet.

Bevorzugt wird das Substrat, auf welchem die kolloidale wässrige Dispersion des Alkalimetallhydrosilikats vorliegt, beim Aufbringen an die zu schützende Oberfläche entfernt.

Bevorzugt liegt die kolloidale wässrige Dispersion des Alkalimetallhydrosilikats an einer Armierung vor, welche auf der zu schützenden Oberfläche verbleibt.

Bevorzugt wird zumindest eine Lage eines mit der kolloidalen wässrigen Dispersion versehenen Armierungsgewebes auf die zu schützenden Oberfläche aufgebracht.

Besonders bevorzugt werden zumindest zwei Lagen eines mit der kolloidalen wässrigen Dispersion versehenen Armierungsgewebes übereinander auf die zu schützenden Oberfläche aufgebracht.

### Beispiele zur Ausführung der Erfindung

Im Folgenden wird der Erfindungsgegenstand durch eine detaillierte Beschreibung eines Herstellungsverfahrens des Brandschutzsystems und seiner Verwendung zum Brandschutz von Baukonstruktionen erläutert.

Im Gegensatz zu den oben beschriebenen Herstellungsverfahren des Hydrosilikatgels, gibt es bei der Herstellung des Brandschutzsystems gemäß der gegenständlichen Erfindung keine Notwendigkeit, die Feuchtigkeit der natürlichen Kieselerden zu korrigieren, bevor sie in den Reaktor zugeführt werden.

Dies begründet sich dadurch, dass der endgültige Wassergehalt der kolloidalen wässrigen Dispersion eines Alkalimetallhydrosilikats den Wassergehalt der Kieselerden, unabhängig vom Ausmaß der Feuchtigkeit der natürlichen Kieselerden, wesentlich übersteigt. Eine zusätzliche Zugabe von Wasser im Reaktor ist immer erforderlich.

Das Gewichtsverhältnis von Wasser zu den trockenen Rohstoffen beträgt bevorzugt zwischen 1:0,5 und 1:2,5.

Bevorzugt wird im Rohstoffsilo die Feuchtigkeit der Kieselerden gemessen und die Menge des in den Reaktor zugeführten Wassers unter Berücksichtigung dieser Feuchtigkeit angepasst.

Bevorzugt erfolgt der Prozess des Mischens der Rohkomponenten nicht bis zum Erhalt eines heißviskosen Halbzeugs, sondern nur bis Alkalimetallhydrosilikat mit einem Silikatmodul m = 3,0 bis 4,5 - insbesondere 3,5 bis 4, 5 - in der Mischung gebildet ist.

Das Mischen erfolgt bevorzugt über einen Zeitraum von 0,1 bis 0,5 Stunden.

Die Bildung des Hydrosilikats in der Mischung wird durch Probenahme direkt aus dem Reaktor kontrolliert.

Die Probequalität kann visuell durch eine Reihe von Kriterien bestimmt werden - den spezifischen Glanz (der mittels spezieller Geräte mit dem Etalon verglichen wird) und die Bildungsgeschwindigkeit des Oberflächenfilms.

Nach Beendigung des Mischvorgangs wird die heiße kolloidale wässrige Dispersion eines Alkalimetallhydrosilikats in einen Behälter gelassen, in dem eine physikalisch-chemische Reaktion der Dispersionswasserbindung für bevorzugt mindestens 24 Stunden mit zunehmender Viskosität der Mischung stattfindet.

Bevorzugt wird die Dispersion über einen Zeitraum von 18 bis 36 Stunden gelagert.

Die Bereitschaft/Reife der kolloidalen Dispersion kann durch rheologische Eigenschaften ähnlich einer Buttercreme bestimmt werden.

Bei einer bevorzugten Herstellung eines Brandschutzsystems wird die fertige kolloidale Dispersion mit einer Schichtstärke von bevorzugt 1-3 mm auf ein Trennfoliensubstrat aufgebracht, dann wird Armierungstextil auf die Oberfläche der Dispersion aufgebracht. Das fertige System wird bevorzugt aufgerollt.

Anschließend wird die Rolle bevorzugt in 1-3 Meter lange Stücke unterteilt, die bevorzugt auf Karton- oder Plastikhülsen gewickelt werden und bevorzugt in eine Vakuumverpackung eingepackt werden.

In einer solchen Verpackung kann das Brandschutzsystem bevorzugt 3 bis 4 Jahre ohne Verlust von Eigenschaften gelagert werden.

### Industrielle Anwendbarkeit

Das gegenständliche Verfahren ermöglicht es, ein universelles Produkt mit einem sehr breiten Anwendungsbereich und einer hohen Brandschutzeffektivität zu erhalten.

Anwendungsbereich des erfindungsgemäßen Brandschutzsystems ist der Brandschutz von Stahl-, Holz- und Betonkonstruktionen, Luftleitungen, Kabelkanälen usw.

Das System kann auch bei der Herstellung von Brandschutztüren bzw. -toren sowie bei Abschottungen von Rohr- und Kabeldurchführungen von Brandschutzwänden und -decken verwendet werden.

Die Verwendung des Brandschutzsystems gemäß der gegenständlichen Erfindung erfordert keine speziellen Anlagen und/oder spezielle Qualifikation des Personals.

Nach dem Auspacken und dem Entfernen der Vakuumverpackung werden die Streifen des Brandschutzsystems einfach auf die zu schützende Oberfläche geklebt.

Beim Verkleben wird die Trennfolie entfernt, wobei das Verkleben durch Adhäsion der kolloidalen Dispersion von Alkalimetallhydrosilicat an der zu schützenden Oberfläche erfolgt.

An die Oberfläche von linearen Konstruktionen mit allseitigem Zugang (Säulen, Luftleitungen, Rohre, Elementen von Dachstühlen) kann das gegenständliche Brandschutzsystem wie ein Verband um den Umfang gewickelt werden.

An die Oberfläche von flachen Konstruktionen und/oder Konstruktionen mit eingeschränktem Zugang kann das gegenständliche Brandschutzsystem in Form von Streifen geklebt werden.

Aufgrund der Anwesenheit eines Armierungsgewebes können mehrere Schichten des Brandschutzsystems in einem Arbeitsgang aufgebracht werden, wodurch es möglich wird, den erforderlichen Feuerwiderstand der Konstruktion mit minimalem Arbeitsaufwand zu erreichen.

Um das Brandschutzsystem umfassend eine kolloidale Dispersion eines Alkalimetallhydrosilikats herzustellen, sind marktübliche industrielle Standardanlagen verwendbar. Die Trennfolie und das Armierungsgewebe werden bevorzugt von Rollen zugeführt. Dann wird bevorzugt eine Schicht kolloidaler Dispersion aufgebracht und das fertige System zu einer Rolle gewickelt.

Für die Vakuumverpackung von Zuschnitten und/oder Rollen des Brandschutzsystems werden Standard-Industrieverpackungsmaschinen verwendet.

Die Lagerung des fertigen feuerhemmenden Systems ist in Lagern ohne Zwangsluft und Abluft, Heizungs- und Brandmeldesysteme sowie automatische Feuerlöschung zulässig.

Während der Lagerung ist mehrfaches Einfrieren und Auftauen möglich.

Die folgenden Figuren veranschaulichen schematisch die Herstellung und Verwendung eines Brandschutzsystems der gegenständlichen Erfindung.
- Fig. 1: veranschaulicht die Herstellung eines Brandschutzsystems gemäß der gegenständlichen Erfindung.
- Fig. 2: veranschaulicht die Verwendung eines Brandschutzsystems gemäß der gegenständlichen Erfindung.

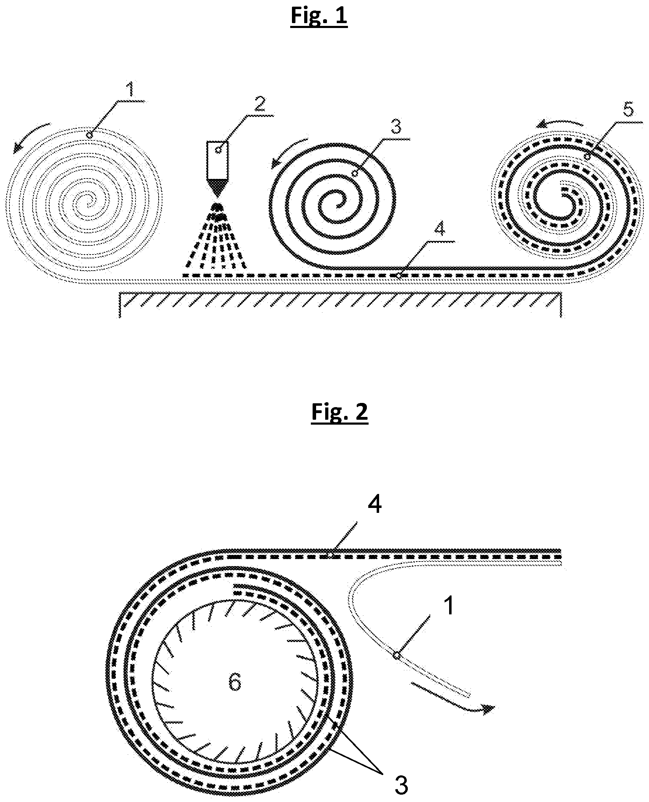

In Fig. 1 ist die Herstellung eines Brandschutzsystems veranschaulicht, umfassend ein Substrat 1, bevorzugt in Form einer Trennfolie, auf welches Substrat 1 eine kolloidale wässrige Dispersion 4 eines Alkalimetallhydrosilikats aufgetragen ist und welches eine Armierung 3 aufweist.

Bevorzugt wird das Substrat 1 von einer Rolle abgewickelt und durch eine Auftragsvorrichtung 2 bewegt. Die Auftragsvorrichtung 2 umfasst bevorzugt zumindest eine Sprühdüse, mit welcher die Dispersion 4 aufgebracht wird. Nach dem Aufbringen der Dispersion 4 auf das Substrat 1 wird eine Armierung 3 bevorzugt ebenfalls von einer Materialrolle abgewickelt und auf die Dispersion 4 aufgebracht bzw. aufgelegt.

Bevorzugt wird das Brandschutzsystem mit den Lagen Substrat 1 - Dispersion 4 - Armierung 3 zu einer Rolle 5 aufgerollt. Die Rolle 5 oder eine andere Packungseinheit des Brandschutzsystems wird danach luftdicht verpackt, bevorzugt vakuumverpackt.

Dadurch wird erreicht, dass die Dispersion 4 die Flüssigkeit behält und erst nach dem Öffnen der Verpackung eine Trocknung und ein Erhärten der Dispersion erfolgt.

Das Substrat 1 ist bevorzugt flexibel. Das Substrat 1 ist bevorzugt eine Kunststofffolie. Das Substrat 1 ist bevorzugt dicht gegenüber der Dispersion 4 und deren flüssige Bestandteile.

Die Armierung 3 ist bevorzugt ein Gewebe. Bevorzugt dringt die Dispersion 4 in die Armierung 3 ein, insbesondere zwischen die Fasern eines Gewebes. Die Dispersion 4 kann die Armierung 3 vollständig, also bis zur gegenüberliegenden Oberfläche der Armierung 3, durchdringen.

Die kolloidale wässrige Dispersion 4, umfassend ein Alkalimetallhydrosilikat, kann gemäß dem hierin beschriebenen Verfahren hergestellt sein, insbesondere durch Ausführung der Schritte:
- Zerkleinern von porösen Siliciumdioxid-Rohstoffen auf eine Partikelgröße, die eine spezifische Oberfläche des Materials im Bereich von 0,05-0,5 m²/Gramm aufweist,
- Dosierung dieses Rohmaterials und lufttrockenes granuliertes Alkalimetallhydroxid,
- Bewässerung im Reaktor und Mischen unter Selbsterhitzung bis zum Erhalt eines heißen Halbzeugs,
- Entladen des heißen Halbzeugs in einen Behälter und Lagerung dieses Halbzeugs im Behälter bis zum Erhalt einer homogenen kolloidalen wässrigen Dispersion des Alkalimetallhydrosilikats.

Die so erzeugte kolloidale wässrige Dispersion 4 eines Alkalimetallhydrosilikats kann direkt aus dem genannten Behälter auf das Substrat 1 aufgebracht werden oder davor umgefüllt und/oder zwischengelagert werden.

Es wird aber nicht ausgeschlossen, dass die in Fig. 1 verwendete Dispersion 4 bzw. die Dispersion 4 des Alkalimetallhydrosilikats des erfindungsgemäßen Brandschutzsystems auf andere, gegebenenfalls weniger vorteilhafte Weise hergestellt werden kann, um für das Brandschutzsystem verwendbar zu sein. Mit anderen Worten wird das beschriebene Herstellungsverfahren der Dispersion 4 bevorzugt verwendet.

Fig. 2 veranschaulicht eine Verwendung des Brandschutzsystems an einem zu schützenden Element 6, beispielsweise einer Säule. Zunächst wird die Verpackung der in Fig. 1 hergestellten Rolle 5 oder einer anderen Verpackungseinheit entfernt (nicht dargestellt).

Das Substrat 1 wird von der Dispersion 4 gelöst und die nun freiliegende Dispersion 4 wird auf die Oberfläche des Elements 6 angedrückt, wobei die Armierung 3 außen liegt. Unter laufendem Abziehen des Substrats 1 werden Dispersion 4 und Armierung 3 weiter entlang der Oberfläche aufgebracht. Dies erfolgt bevorzugt in mehreren Lagen, wobei dies an einem allseits zugänglichen Element 6, wie beispielsweise einer Säule, durch mehrlagige Umwicklung des Elements 6 erfolgen kann.

Sofern das System auf eine andere Oberfläche, wie beispielsweise eine Wand aufgebracht wird, können auch getrennte bzw. geschnittene Streifen des Brandschutzsystems übereinander aufgebracht werden.

Da die Armierung 3 bevorzugt von der Dispersion 4 durchdringbar ist, verbinden sich jeweils zwei übereinanderliegende Lagen der Dispersion 4 durch die dazwischenliegende Armierung 3 hindurch. Dadurch ergibt sich ein besonders guter Halt der Lagen aneinander.

Sobald die Verpackung, insbesondere Vakuumverpackung, von der Rolle 5 oder einer anderen Verpackungseinheit entfernt wurde, beginnt die Dispersion 4 zu erhärten, wobei ausreichend Zeit zum Aufbringen des Brandschutzsystems verbleibt. Die Dispersion 4 härtet also nach dem Aufbringen an der Oberfläche des zu schützenden Elements 6 aus.

## Patentansprüche

1. Verfahren zur Herstellung eines Brandschutzsystems, umfassend:
Dosierung eines zerkleinerten Siliciumdioxid-Rohstoffs und eines granulierten Alkalimetallhydroxids in einen Reaktor;
Hinzufügen von Wasser im Reaktor und Mischen unter Selbsterhitzung bis zum Erhalt eines heißen Halbzeugs;
Lagerung dieses Halbzeugs bis zum Erhalt einer homogenen kolloidalen wässrigen Dispersion (4) des Alkalimetallhydrosilikats;
Aufbringen der homogenen kolloidalen wässrigen Dispersion (4) auf ein Substrat (1),
wobei das Brandschutzsystem luftdicht verpackt oder vakuumverpackt wird, solange die Dispersion (4) flüssig ist.

2. Verfahren nach Anspruch 1, **dadurch gekennzeichnet, dass** der Siliciumdioxid-Rohstoff auf eine Partikelgröße, die eine spezifische Oberfläche des Materials im Bereich von 0,05 bis 0,5 m² / Gramm aufweist zerkleinert wurde.

3. Verfahren nach einem der Ansprüche 1 bis 2, **dadurch gekennzeichnet, dass** das granulierte Alkalimetallhydroxid lufttrocken ist.

4. Verfahren nach einem der Ansprüche 1 bis 3, **dadurch gekennzeichnet, dass** das heiße Halbzeug für die Lagerung in einen Behälter gefüllt wird.

5. Verfahren nach einem der Ansprüche 1 bis 4, **dadurch gekennzeichnet, dass** die Dispersion (4) auf ein Substrat (1) in Form einer Trennfolie aufgebracht wird.

6. Verfahren nach einem der Ansprüche 1 bis 5, **dadurch gekennzeichnet, dass** eine Armierung (3) in die aufgebrachte Dispersion (4) eingelegt oder auf diese aufgelegt wird.

7. Verfahren nach Anspruch 6, **dadurch gekennzeichnet, dass** das Verhältnis der Masse der Schicht der Dispersion (4) von Alkalimetallhydrosilikat und der Masse der Armierung (3) im Bereich von 10: 1 bis 2: 1 liegt.

8. Verfahren nach einem der Ansprüche 1 bis 7, **dadurch gekennzeichnet, dass** ein Streifen des Brandschutzsystems zu einer Rolle gerollt wird, bevor es luftdicht verpackt oder vakuumverpackt wird.

9. Gebrauchsfertiges Brandschutzsystem, umfassend eine Dispersion (4) eines Alkalimetallhydrosilikats ein Substrat (1) und eine Armierung (3), **dadurch gekennzeichnet, dass** dieses in einer luftdichten Verpackung oder einer Vakuumverpackung vorliegt.

10. Gebrauchsfertiges Brandschutzsystem nach Anspruch 9, **dadurch gekennzeichnet, dass** die Armierung (3) ein Armierungsgewebe ist, bevorzugt in Form von Sackleinen und/oder Basalttextilien, welches Armierungsgewebe von der Dispersion (4) durchdringbar ist.

11. Gebrauchsfertiges Brandschutzsystem nach einem der Ansprüche 9 bis 10, **dadurch gekennzeichnet, dass** das Substrat (1) eine Trennfolie ist, welche dicht gegenüber der Dispersion (4) ist.

12. Verwendung eines gebrauchsfertigen Brandschutzsystems gemäß einem der Ansprüche 9 bis 11, **dadurch gekennzeichnet, dass** das Brandschutzsystem nach Entfernen der Verpackung oder Vakuumverpackung auf eine zu schützende Oberfläche aufgebracht wird und die Dispersion (4) des Alkalimetallhydrosilikats nachfolgend aushärtet.

13. Verwendung nach Anspruch 12, **dadurch gekennzeichnet, dass** das Substrat (1), auf welchem die Dispersion (4) des Alkalimetallhydrosilikats vorliegt, beim Aufbringen an die zu schützende Oberfläche entfernt wird.

14. Verwendung nach einem der Ansprüche 12 bis 13, **dadurch gekennzeichnet, dass** die Dispersion (4) des Alkalimetallhydrosilikats an einer Armierung (3) vorliegt, welche auf der zu schützenden Oberfläche verbleibt.

15. Verwendung nach einem der Ansprüche 12 bis 14, **dadurch gekennzeichnet, dass** eine Lage eines mit der Dispersion (4) versehenen Armierungsgewebes auf die zu schützenden Oberfläche aufgebracht wird, oder zumindest zwei Lagen eines mit der Dispersion (4) versehenen Armierungsgewebes übereinander auf die zu schützenden Oberfläche aufgebracht werden.

## Claims

1. A method of producing a fire protection system, comprising:
dosing a crushed silicon dioxide raw material and a granulated alkali metal hydroxide into a reactor;
adding water in the reactor and mixing under self-heating until a hot pre-product is obtained;
storing said pre-product until a homogenous, colloidal, aqueous dispersion (4) of the alkali metal hydrosilicate is obtained;
applying said homogenous, colloidal, aqueous dispersion (4) to a substrate (1),
wherein the fire protection system is packaged airtight or vacuum-packaged as long as the dispersion (4) is liquid.

2. The method of claim 1, **characterized in that** the silicon dioxide raw material was crushed to a particle size having a specific surface area of the material ranging from 0.05 to 0.5m²/gram.

3. The method of any one of claims 1 to 2, **characterized in that** the granulated alkali metal hydroxide is air-dry.

4. The method of any one of claims 1 to 3, **characterized in that** the hot pre-product is filled into a container for storage.

5. The method of any one of claims 1 to 4, **characterized in that** the dispersion (4) is applied to a substrate (1) in the form of a separating foil.

6. The method of any one of claims 1 to 5, **characterized in that** a reinforcement (3) is inserted into or placed on the applied dispersion (4).

7. The method of claim 6, **characterized in that** the ratio of the mass of the layer of dispersion (4) of alkali metal hydrosilicate and the mass of the reinforcement (3) ranges from 10:1 to 2:1.

8. The method of any one of claims 1 to 7, **characterized in that** a strip of the fire protection system is rolled into a roll before it is packaged airtight or vacuum-packaged.

9. A ready-for-use fire protection system comprising a dispersion (4) of an alkali metal hydrosilicate, a substrate (1), and a reinforcement (3), **characterized in that** it is present in an air-tight or vacuum packaging.

10. The ready-for-use fire protection system of claim 9, **characterized in that** the reinforcement (3) is a reinforcement fabric, preferably in the form of burlap und/or basalt textiles, which reinforcement fabric can be penetrated by the dispersion (4).

11. The ready-for-use fire protection system of any one of claims 9 to 10, **characterized in that** the substrate (1) is a separating foil, which is sealed off against the dispersion (4).

12. Use of the ready-for-use fire protection system of any one of claims 9 to 11, **characterized in that**, after removing the packaging or vacuum packaging, the fire protection system is applied to a surface to be protected and the dispersion (4) of the alkali metal hydrosilicate is subsequently cured.

13. Use of claim 12, **characterized in that** the substrate (1) on which the dispersion (4) of the alkali metal hydrosilicate is present is removed during application to the surface to be protected.

14. Use of any one of claims 12 to 13, **characterized in that** the dispersion (4) of the alkali metal hydrosilicate is present in a reinforcement (3), which remains on the surface to be protected.

15. Use of any one of claims 12 to 14, **characterized in that** one ply of a reinforcement fabric provided with the dispersion (4) is applied to the surface to be protected or **in that** at least two plies of a reinforcement fabric provided with the dispersion (4) are applied, on top of each other, to the surface to be protected.

## Revendications

1. Procédé de fabrication d'un système de protection contre l'incendie, comprenant :
doser une matière première de silice broyée et un hydroxyde de métal alcalin granulé dans un réacteur ;
ajouter de l'eau dans le réacteur et mélanger avec auto-échauffement jusqu'à l'obtention d'un produit semi-fini chaud ;
stocker ce produit semi-fini jusqu'à l'obtention d'une dispersion aqueuse colloïdale homogène (4) de l'hydrosilicate de métal alcalin ;
appliquer la dispersion aqueuse colloïdale homogène (4) sur un substrat (1),
ledit système de protection contre l'incendie étant emballé de manière étanche à l'air ou sous vide tant que la dispersion (4) est liquide.

2. Procédé selon la revendication 1, **caractérisé en ce que** la matière première de silice a été broyée à une taille de particule qui présente une surface spécifique du matériau dans la plage de 0,05 à 0,5 m² / gramme.

3. Procédé selon l'une des revendications 1 à 2, **caractérisé en ce que** l'hydroxyde de métal alcalin granulé est séché à l'air.

4. Procédé selon l'une des revendications 1 à 3, **caractérisé en ce que** le produit semi-fini chaud est placé dans un récipient pour le stockage.

5. Procédé selon l'une des revendications 1 à 4, **caractérisé en ce que** la dispersion (4) est appliquée sur un substrat (1) sous la forme d'un film de séparation.

6. Procédé selon l'une des revendications 1 à 5, **caractérisé en ce qu'**une armature (3) est insérée dans la dispersion (4) appliquée ou posée sur celle-ci.

7. Procédé selon la revendication 6, **caractérisé en ce que** le rapport de la masse de la couche de la dispersion (4) d'hydrosilicate de métal alcalin et de la masse de l'armature (3) se situe dans la plage de 10: 1 à 2: 1.

8. Procédé selon l'une des revendications 1 à 7, **caractérisé en ce qu'**une bande du système de protection contre l'incendie est enroulée en un rouleau avant d'être emballée de manière étanche à l'air ou sous vide.

9. Système de protection contre l'incendie prêt à l'emploi, comprenant une dispersion (4) d'un hydrosilicate de métal alcalin, un substrat (1) et une armature (3), **caractérisé en ce qu'**il se présente dans un emballage étanche à l'air ou dans un emballage sous vide.

10. Système de protection contre l'incendie prêt à l'emploi selon la revendication 9, **caractérisé en ce que** l'armature (3) est un tissu d'armature, de préférence sous forme de toile de sac et/ou de textile de basalte, lequel tissu d'armature peut être pénétré par la dispersion (4).

11. Système de protection contre l'incendie prêt à l'emploi selon l'une des revendications 9 à 10, **caractérisé en ce que** le substrat (1) est un film de séparation qui est étanche par rapport à la dispersion (4).

12. Utilisation d'un système de protection contre l'incendie prêt à l'emploi selon l'une des revendications 9 à 11, **caractérisée en ce que** le système de protection contre l'incendie est appliqué sur une surface à protéger après avoir retiré l'emballage ou l'emballage sous vide et **en ce que** la dispersion (4) de l'hydrosilicate de métal alcalin durcit ensuite.

13. Utilisation selon la revendication 12, **caractérisée en ce que** le substrat (1) sur lequel est présente la dispersion (4) de l'hydrosilicate de métal alcalin est enlevé lors de l'application sur la surface à protéger.

14. Utilisation selon l'une des revendications 12 à 13, **caractérisée en ce que** la dispersion (4) de l'hydrosilicate de métal alcalin est présente sur une armature (3) qui reste sur la surface à protéger.

15. Utilisation selon l'une quelconque des revendications 12 à 14, **caractérisée en ce qu'**une couche d'un tissu d'armature muni de la dispersion (4) est appliquée sur la surface à protéger, ou au moins deux couches d'un tissu d'armature muni de la dispersion (4) sont appliquées l'une sur l'autre sur la surface à protéger.
